# EUROPEAN PATENT APPLICATION

(11) **EP 4 539 566 A1**
(43) Date of publication of application: **16.04.2025**
(21) Application number: 22946117.3
(22) Date of filing: 13.06.2022
(51) Int. Cl.: H04W 64/00, G01S 19/42

(54) **METHOD AND APPARATUS FOR INDICATING GLOBAL NAVIGATION SATELLITE SYSTEM (GNSS) MEASUREMENT**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2022/098479
(87) International publication number: WO 2023/240417

(57) **Abstract**

Disclosed in embodiments of the present disclosure are a method and apparatus for indicating global navigation satellite system (GNSS) measurement, applied to the technical field of communications. A method implemented by a network device comprises: sending first indication information to a terminal device, wherein the first indication information is used for instructing the terminal device to perform GNSS measurement (201). Triggering a terminal device to perform GNSS measurement ensures that latest and valid GNSS position information is obtained before current GNSS position information of the terminal device fails, thereby preventing the terminal device from entering an idle state, and thus improving the communication performance.

## Description

### TECHNICAL FIELD

The disclosure relates to the field of communication technology, in particular to a method for indicating global navigation satellite system (GNSS) measurement and a device thereof.

### BACKGROUND

As continuous development of Internet of Things applications and complex scenarios of interconnectedness of all things, an accuracy of terminal location information is increasingly required.

In related arts, in satellite communication networks, terminal devices need to be positioned by a global navigation satellite system (GNSS) to determine its own position information, so as to facilitate uplink synchronization compensation. However, GNSS position information of the terminal device is time-sensitive. When a service with a relatively long transmission time is supported, if the GNSS position information expires, the terminal device needs to enter an idle state to re-obtain the GNSS position information, which may cause unnecessary service delay and power consumption.

### SUMMARY

Embodiments of the disclosure provide a method for indicating global navigation satellite system (GNSS) measurement and a device thereof.

In a first aspect, embodiments of the present disclosure provide a method for indicating global navigation satellite system (GNSS) measurement. The method is performed by a network device and includes:
sending first indication information to a terminal device, in which the first indication information is configured to instruct the terminal device to perform the GNSS measurement.

In the disclosure, the network device may send the first indication information for instructing the terminal device to perform the GNSS measurement to the terminal device, to trigger the terminal device to perform the GNSS measurement, which may ensure that the last valid GNSS position information of the terminal device is obtained before the current GNSS position information of the terminal device becomes invalid, thus preventing the terminal device from entering the idle state, and improving communication performance.

Optionally, sending the first indication information to the terminal device includes:
sending the first indication information to the terminal device at a designated time, in which the designated time is a designated time point or within a designated time window.

Optionally, the method further includes:
receiving second indication information sent by the terminal device, in which the second indication information indicates time information of GNSS position information;
determining an expiration time point of the GNSS position information according to the time information;
determining the designated time according to the expiration time point.

Optionally, the method further includes:
determining any time point that is before the expiration time point and with a time interval greater than a first threshold from the expiration time point as the designated time point; or,
determining a designated duration before the expiration time point as the designated time window, in which a time interval between an ending time point of the designated duration and the expiration time point is greater than a second threshold.

Optionally, the method further includes:
sending third indication information to the terminal device, in which the third indication information indicates the designated time.

Optionally, sending the first indication information to the terminal device includes:
sending downlink control information (DCI) to the terminal device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information is sent to the terminal device by any one of:
system information;
a radio resource control (RRC) message; or
a media access control (MAC) control element (CE).

Optionally, the first indication information further indicates a GNSS measurement time point, or an index value corresponding to configuration information of a GNSS measurement window.

Optionally, the method further includes:
sending fourth indication information to the terminal device, in which the fourth indication information indicates configuration information of a plurality of GNSS measurement windows and index values corresponding to the configuration information of the plurality of GNSS measurement windows respectively.

Optionally, the method further includes:
sending fifth indication information to the terminal device, in which the fifth indication information indicates to the terminal device detection configuration information of the first indication information.

In a second aspect, embodiments of the present disclosure provide another method for indicating global navigation satellite system (GNSS) measurement, performed by a terminal device, comprising:
receiving first indication information sent by a network device, in which the first indication information is configured to instruct the terminal device to perform the GNSS measurement.

In the disclosure, the terminal device may receive the first indication information for instructing the terminal device to perform the GNSS measurement sent by the network device, to perform the GNSS measurement, which may ensure that the last valid GNSS position information of the terminal device is obtained before the current GNSS position information of the terminal device becomes invalid, thus preventing the terminal device from entering the idle state, and improving communication performance.

Optionally, receiving the first indication information sent by the network device includes:
receiving the first indication information sent by the network device at a designated time, in which the designated time is a designated time point or a designated time window before an expiration time point of GNSS position information.

Optionally, the method further includes:
sending second indication information to the network device, in which the second indication information indicates time information of the GNSS position information.

Optionally, the method further includes:
receiving third indication information sent by the network device, wherein the third indication information indicates the designated time.

Optionally, the method further includes:
without receiving the first indication information at a first designated time, withholding from performing the GNSS measurement before a next adjacent designated time.

Optionally, receiving the first indication information sent by the network device includes:
receiving downlink control information (DCI) sent by the network device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information sent by the terminal device is received by any one of:
system information; a radio resource control (RRC) message; or a media access control (MAC) control element (CE).

Optionally, the first indication information further indicates a GNSS measurement time point, or an index value corresponding to configuration information of a GNSS measurement window.

Optionally, the method further includes:
receiving fourth indication information sent by the network device, in which the fourth indication information indicates configuration information of a plurality of GNSS measurement windows and index values corresponding to the configuration information of the plurality of GNSS measurement windows respectively.

Optionally, the method further includes:
receiving fifth indication information sent by the network device, in which the fifth indication information indicates to the terminal device detection configuration information of the first indication information;
in which receiving the first indication information sent by the network device includes:
receiving the first indication information sent by the network device based on the detection configuration information.

In a third aspect, embodiments of the disclosure provide a network device. The network device includes:
a transceiver module, configured to send first indication information to a terminal device, in which the first indication information is configured to instruct the terminal device to perform global navigation satellite system (GNSS) measurement.

Optionally, the transceiver module is configured to:
send the first indication information to the terminal device at a designated time, in which the designated time is a designated time point or within a designated time window.

Optionally, the transceiver module is configured to:
receive second indication information sent by the terminal device, in which the second indication information indicates time information of GNSS position information;
the device further includes a processing module, configured to:
determine an expiration time point of the GNSS position information according to the time information; determine the designated time according to the expiration time point.

Optionally, the processing module is configured to:
determine any time point that is before the expiration time point and with a time interval greater than a first threshold from the expiration time point as the designated time point; or,
determine a designated duration before the expiration time point as the designated time window, in which a time interval between an ending time point of the designated duration and the expiration time point is greater than a second threshold.

Optionally, the transceiver module is configured to:
send third indication information to the terminal device, in which the third indication information indicates the designated time.

Optionally, the transceiver module is configured to:
send downlink control information (DCI) to the terminal device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information is sent to the terminal device by any one of:
system information; a radio resource control (RRC) message; or a media access control (MAC) control element (CE).

Optionally, the first indication information further indicates a GNSS measurement time point, or an index value corresponding to configuration information of a GNSS measurement window.

Optionally, the transceiver module is configured to:
send fourth indication information to the terminal device, in which the fourth indication information indicates configuration information of a plurality of GNSS measurement windows and index values corresponding to the configuration information of the plurality of GNSS measurement windows respectively.

Optionally, the transceiver module is configured to:
send fifth indication information to the terminal device, in which the fifth indication information indicates to the terminal device detection configuration information of the first indication information.

In a fourth aspect, embodiments of the present disclosure provide a terminal device. The a terminal device includes:
a transceiver module, configured to receive first indication information sent by a network device, in which the first indication information is configured to instruct the terminal device to perform the GNSS measurement.

Optionally, the first indication information sent by the network device is received at a designated time, in which the designated time is a designated time point or a designated time window before an expiration time point of GNSS position information.

Optionally, the transceiver module is configured to:
send second indication information to the network device, in which the second indication information indicates time information of the GNSS position information.

Optionally, the transceiver module is configured to:
receive third indication information sent by the network device, wherein the third indication information indicates the designated time.

Optionally, the device further includes :
a processing module, configured to, without receiving the first indication information at a first designated time, withhold from performing the GNSS measurement before a next adjacent designated time.

Optionally, the transceiver module is configured to:
receive downlink control information (DCI) sent by the network device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information sent by the terminal device is received by any one of:
system information; a radio resource control (RRC) message; or a media access control (MAC) control element (CE).

Optionally, the first indication information further indicates a GNSS measurement time point, or an index value corresponding to configuration information of a GNSS measurement window.

Optionally, the transceiver module is configured to:
receive fourth indication information sent by the network device, in which the fourth indication information indicates configuration information of a plurality of GNSS measurement windows and index values corresponding to the configuration information of the plurality of GNSS measurement windows respectively.

Optionally, the transceiver module is configured to:
receive fifth indication information sent by the network device, in which the fifth indication information indicates to the terminal device detection configuration information of the first indication information;
in which receiving the first indication information sent by the network device includes:
receiving the first indication information sent by the network device based on the detection configuration information.

In a fifth aspect, embodiments of the disclosure provide a communication device. The communication device includes: a processor. When the processor calls a computer program stored in a memory, the method described in the first aspect above is implemented.

In a sixth aspect, embodiments of the disclosure provide a communication device. The communication device includes: a processor. When the processor calls a computer program stored in a memory, the method described in the second aspect above is implemented.

In a seventh aspect, embodiments of the disclosure provide a communication device. The communication device includes: a processor and a memory having a computer program stored thereon. When the processor executes the computer program stored in the memory, the communication device is caused to implement the method described in the first aspect above.

In an eighth aspect, embodiments of the disclosure provide a communication device. The communication device includes: a processor and a memory having a computer program stored thereon. When the processor executes the computer program stored in the memory, the communication device is caused to implement the method described in the second aspect above.

In a ninth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the first aspect above.

In a tenth aspect, embodiments of the disclosure provide a communication device. The communication device includes: a processor and an interface circuit. The interface circuit is configured to receive code instructions and transmit the code instructions to the processor. The processor is configured to run the code instructions to cause the device to perform the method described in the second aspect above.

In an eleventh aspect, embodiments of the disclosure provide a system for indicating global navigation satellite system (GNSS) measurement. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

In a twelfth aspect of embodiments of the disclosure, a computer-readable storage medium is provided. The computer-readable storage medium is configured to store instructions used by the above network device. When the instructions are executed, the network device is caused to implement the method of the first aspect.

In a thirteenth aspect of embodiments of the disclosure, a readable storage medium is provided. The readable storage medium is configured to store instructions used by the above terminal device. When the instructions are executed, the terminal device is caused to implement the method of the second aspect.

In a fourteenth aspect of embodiments of the disclosure, a computer program product including a computer program is provided. When the computer program is run by a computer, the computer is caused to implement the method of the first aspect.

In a fifteenth aspect of embodiments of the disclosure, a computer program product including a computer program is provided. When the computer program is run by a computer, the computer is caused to implement the method of the second aspect.

In a sixteenth aspect of embodiments of the disclosure, a chip system is provided. The chip system includes at least one processor and an interface for supporting the network device in realizing the functions involved in the first aspect, e.g., determining or processing at least one of data or information involved in the method described above. In a possible design, the chip system further includes a memory. The memory is configured to store necessary computer programs and data of the network device. The chip system may consist of chips or may include a chip and other discrete devices.

In a seventeenth aspect of embodiments of the disclosure, a chip system is provided. The chip system includes at least one processor and an interface for supporting the terminal device in realizing the functions involved in the second aspect, e.g., determining or processing at least one of data or information involved in the method described above. In a possible design, the chip system further includes a memory. The memory is configured to store necessary computer programs and data of the terminal device. The chip system may consist of chips or may include a chip and other discrete devices.

In an eighteenth aspect of embodiments of the disclosure, a computer program is provided. When the computer program is running on a computer, the computer is caused to implement the method of the first aspect.

In a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments of the disclosure or the background technologies is given below.
FIG. 1 is a structural diagram of a communication system provided by an embodiment of the disclosure.
FIG. 2 is a flowchart of a method for indicating global navigation satellite system (GNSS) measurement provided by an embodiment of the disclosure.
FIG. 3 is a flowchart of another method for indicating global navigation satellite system (GNSS) measurement provided by an embodiment of the disclosure.
FIG. 4 is a flowchart of yet another method for indicating global navigation satellite system (GNSS) measurement provided by an embodiment of the disclosure.
FIG. 5 is a flowchart of yet another method for indicating global navigation satellite system (GNSS) measurement provided by an embodiment of the disclosure.
FIG. 6 is a flowchart of yet another method for indicating global navigation satellite system (GNSS) measurement provided by an embodiment of the disclosure.
FIG. 7 is a flowchart of yet another method for indicating global navigation satellite system (GNSS) measurement provided by an embodiment of the disclosure.
FIG. 8 is a flowchart of yet another method for indicating global navigation satellite system (GNSS) measurement provided by an embodiment of the disclosure.
FIG. 9 is a flowchart of yet another method for indicating global navigation satellite system (GNSS) measurement provided by an embodiment of the disclosure.
FIG. 10 is a flowchart of yet another method for indicating global navigation satellite system (GNSS) measurement provided by an embodiment of the disclosure.
FIG. 11 is a flowchart of yet another method for indicating global navigation satellite system (GNSS) measurement provided by an embodiment of the disclosure.
FIG. 12 is a flowchart of yet another method for indicating global navigation satellite system (GNSS) measurement provided by an embodiment of the disclosure.
FIG. 13 is a flowchart of yet another method for indicating global navigation satellite system (GNSS) measurement provided by an embodiment of the disclosure.
FIG. 14 is a flowchart of yet another method for indicating global navigation satellite system (GNSS) measurement provided by an embodiment of the disclosure.
FIG. 15 is a flowchart of yet another method for indicating global navigation satellite system (GNSS) measurement provided by an embodiment of the disclosure.
FIG. 16 is a flowchart of yet another method for indicating global navigation satellite system (GNSS) measurement provided by an embodiment of the disclosure.
FIG. 17 is a flowchart of yet another method for indicating global navigation satellite system (GNSS) measurement provided by an embodiment of the disclosure.
FIG. 18 is a structural diagram of a communication device provided by an embodiment of the disclosure.
FIG. 19 is a structural diagram of another communication device provided by an embodiment of the disclosure.
FIG. 20 is a structural diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

To facilitate understanding the disclosure, terms involved in the disclosure are introduced here.
1. Global navigation satellite system (GNSS).

The GNSS refers to all satellite navigation systems, including global, regional and augmentation satellite navigation systems, such as the United States's GPS, the Russia's Glonass, the Europe's Galileo, and the China's Beidou satellite navigation system, and related augmentation systems, such as the United States's WAAS (Wide Area Augmentation System), the Europe's EGNOS (European Geostationary Navigation Overlay System), and the Japan's MSAS (Multi-Functional Satellite Augmentation System), etc. The satellite navigation systems also include other satellite navigation systems under construction and to be constructed in the future.

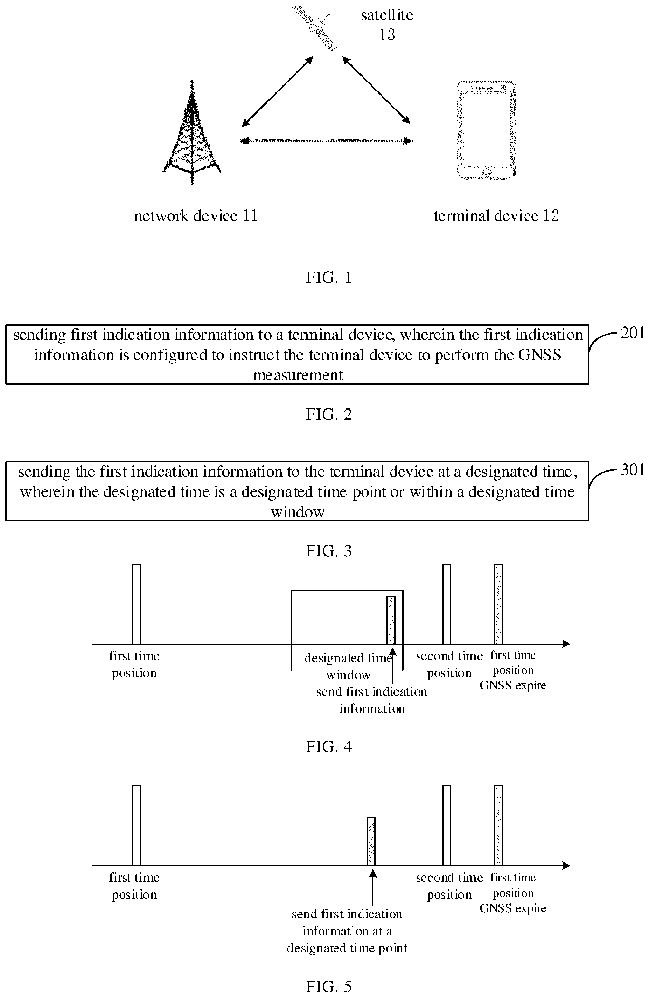

Please refer to FIG. 1, FIG. 1 is a structural diagram of a communication system provided by an embodiment of the disclosure. The communication system may include, but is not limited to, one network device and one terminal device. The number and the form of devices illustrated in FIG. 1 are only for examples and do not constitute a limitation on the embodiments of the disclosure. The communication system may include two or more network devices and two or more terminal devices in practical applications. The communication system illustrated in FIG. 1 includes, for example, a network device 11, a terminal device 12 and a satellite 13.

It is noteworthy that the technical solutions of the embodiments of the disclosure can be applied to various communication systems, such as, a long term evolution (LTE) system, a 5th generation (5G) mobile communication system, a 5G NR (new radio) system, or other future new mobile communication systems.

The network device 11 in the embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device according to the embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal device 12 in the embodiments of the disclosure is an entity on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

Generally, when GNSS position information of a terminal device becomes invalid, the terminal device may enter an idle state, thus causing delays in communication services and unnecessary power consumption. In the present disclosure, a network device instructs the terminal device to perform GNSS measurement before the GNSS position information expires, thereby preventing the terminal device from entering the idle state and improving performance of a communication system.

Please refer to FIG. 2, FIG. 2 is a flowchart of a method for indicating global navigation satellite system (GNSS) measurement provided by an embodiment of the disclosure. The method is performed by a network device. As illustrated in FIG. 2, the method may include, but is not limited to, following steps.

At step 201, first indication information is sent to a terminal device, in which the first indication information is configured to instruct the terminal device to perform the GNSS measurement.

In the present disclosure, in a satellite communication network, the terminal device can be positioned by a global navigation satellite system (GNSS) to determine GNSS position information, and perform uplink synchronization compensation based on the GNSS position information. However, the GNSS position information of the terminal device is time-sensitive. If the GNSS position information expires, the terminal device can enter an idle state to re-obtain the GNSS position information, which may cause unnecessary service delay and power consumption.

In the present disclosure, the network device may send the first indication information to the terminal device before the GNSS position information of the terminal device becomes invalid, instructing the terminal device to perform the GNSS measurement.

Optionally, the network device may determine validity of the current GNSS position information of the terminal device, and send the first indication information to the terminal device at an appropriate occasion, instructing the terminal device to perform the GNSS measurements, which may ensure that the last valid GNSS position information of the terminal device is obtained before the current GNSS position information of the terminal device becomes invalid, thus avoiding a delay caused by the terminal device entering the idle state, and improving communication performance.

In the present disclosure, the network device may send the first indication information for instructing the terminal device to perform the GNSS measurement to the terminal device, to trigger the terminal device to perform the GNSS measurement, which may ensure that the last valid GNSS position information of the terminal device is obtained before the current GNSS position information of the terminal device becomes invalid, thus preventing the terminal device from entering the idle state, and improving communication performance.

Please refer to FIG. 3, FIG. 3 is a flowchart of a method for indicating global navigation satellite system (GNSS) measurement provided by an embodiment of the disclosure. The method is performed by a network device. As illustrated in FIG. 3, the method may include, but is not limited to, following steps.

At step 301, the first indication information is sent to the terminal device at a designated time. The designated time is a designated time point or within a designated time window.

The specific description of the first indication information may refer to the detailed description of any embodiment of the present disclosure, and will not be repeated here.

In the present disclosure, the network device may send the first indication information to the terminal device at the designated time before the current GNSS position information of the terminal device becomes invalid, or within the designated time window before the current GNSS position information of the terminal device becomes invalid, to instruct the terminal device to perform the GNSS measurement. On the one hand, it may effectively prevent the terminal device from entering an idle state caused by the GNSS position information of the terminal device becoming invalid. On the other hand, it can avoid signaling consumption. The time window may be a continuous period of time.

For example, as shown in FIG. 4, the network device in FIG. 4 may send the first indication information to the terminal device within a designated time window before a GNSS position measured by the GNSS at a first time position (that is, the current GNSS position) becomes invalid, to instruct the terminal device to perform the GNSS measurement. Thus, before the GNSS position measured by the GNSS at the first time position becomes invalid, the last valid GNSS position (that is, a GNSS position measured by the GNSS at a second time position) may be obtained. It may effectively prevent the terminal device from entering the idle state caused by the GNSS position information of the terminal device becoming invalid.

For another example, as shown in FIG. 5, the network device in FIG. 5 may send the first indication information to the terminal device at a designated time point before the GNSS position measured by the GNSS at the first time position (that is, the current GNSS position) becomes invalid, to instruct the terminal device to perform the GNSS measurement. Thus, before the GNSS position measured by the GNSS at the first time position becomes invalid, the last valid GNSS position (that is, a GNSS position measured by the GNSS at a second time position) may be obtained. It may effectively prevent the terminal device from entering the idle state caused by the GNSS position information of the terminal device becoming invalid.

In the present disclosure, the network device may send the first indication information for instructing the terminal device to perform the GNSS measurement to the terminal device at the designated time. The terminal device may perform the GNSS measurement after receiving the first indication information. It may ensure that the last valid GNSS position information of the terminal device is obtained before the current GNSS position information of the terminal device becomes invalid, thus preventing the terminal device from entering the idle state, and improving communication performance.

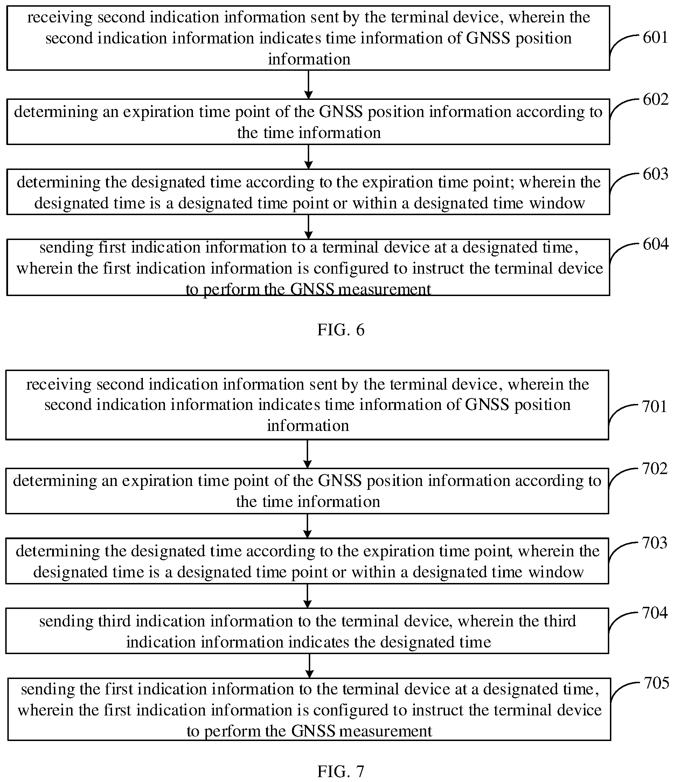

Please refer to FIG. 6, FIG. 6 is a flowchart of a method for indicating global navigation satellite system (GNSS) measurement provided by an embodiment of the disclosure. The method is performed by a network device. As illustrated in FIG. 6, the method may include, but is not limited to, following steps.

At step 601, second indication information sent by the terminal device is received. The second indication information indicates time information of GNSS position information.

The time information of the GNSS position information may configured to indicate available time information or unavailable time information of the GNSS position information.

In the present disclosure, after determining the GNSS position information, the terminal device may determine the available time information or the unavailable time information of the GNSS position information based on a mobile speed of the terminal device, etc., and then send the second indication information for indicating the time information of the GNSS position information to the network device, to indicate to the network device a valid time of the GNSS position information.

At step 602, an expiration time point of the GNSS position information is determined according to the time information.

In the present disclosure, the network device may determine the expiration time point of the GNSS position information based on the time information of the GNSS position information. For example, assuming that the time information of the GNSS position information is that a valid duration of the GNSS position information is 100 lots, it may be determined that the expiration time point of the GNSS position information is a time point after 100 slots from receiving the GNSS position information.

At step 603, the designated time is determined according to the expiration time point.

In the present disclosure, any time point that is before the expiration time point of the GNSS position information and with a time interval greater than a preset first threshold from the expiration time point the GNSS position information may be determined as the designated time point.

For example, assuming that the expiration time point of the GNSS position information is the time point after 100 slots from receiving the GNSS position information, and the first threshold is 10, the designated time point may be any one slot position among the 1st to 90th slots after receiving the GNSS position information.

Optionally, a designated duration before the expiration time point may be determined as the designated time window. A time interval between an ending time point of the designated duration and the expiration time point is greater than a second threshold.

For example, assuming that the expiration time point of the GNSS position information is the time point after 100 slots from receiving the GNSS position information, and the first threshold is 10, the designated time window may be any duration in the 1st to 90th slots after receiving the GNSS position information, for example, a between the 70th and 90th slots.

At step 604, the first indication information is sent to the terminal device at the designated time. The first indication information is configured to instruct the terminal device to perform the GNSS measurement.

In the present disclosure, the specific implementation process of step 604 may refer to the detailed description of any embodiment of the present disclosure, and will not be repeated here.

In the present disclosure, after receiving the second indication information for indicating the time information of GNSS position information sent by the terminal device, the network device may determine the expiration time point of the GNSS position information based on the time information, and then determine the designated time based on the expiration time point, and send the first indication information for instructing the terminal device to perform the GNSS measurement to the terminal devices at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

Please refer to FIG. 7, FIG. 7 is a flowchart of a method for indicating global navigation satellite system (GNSS) measurement provided by an embodiment of the disclosure. The method is performed by a network device. As illustrated in FIG. 7, the method may include, but is not limited to, following steps.

At step 701, second indication information sent by the terminal device is received. The second indication information indicates time information of GNSS position information.

At step 702, an expiration time point of the GNSS position information is determined according to the time information.

At step 703, the designated time is determined according to the expiration time point.

In the present disclosure, the specific implementation process of step 701 to step 703 may refer to the detailed description of any embodiment of the present disclosure, and will not be repeated here.

At step 704, third indication information is sent to the terminal device, in which the third indication information indicates the designated time.

In the present disclosure, the network device may send to the terminal device the third indication information for indicating the designated time. Therefore, the terminal device may receive the first indication information sent by the network device at the designated time, thus improving an accuracy of reception of the first indication information.

At step 705, the first indication information is sent to the terminal device at the designated time. The first indication information is configured to instruct the terminal device to perform the GNSS measurement.

In the present disclosure, the specific implementation process of step 705 may refer to the detailed description of any embodiment of the present disclosure, and will not be repeated here.

In the present disclosure, after receiving the second indication information for indicating the time information of GNSS position information sent by the terminal device, the network device may determine the expiration time point of the GNSS position information based on the time information, and then determine the designated time based on the expiration time point, send the third indication information for indicating the designated time to the terminal device, and send the first indication information for instructing the terminal device to perform the GNSS measurement to the terminal device at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

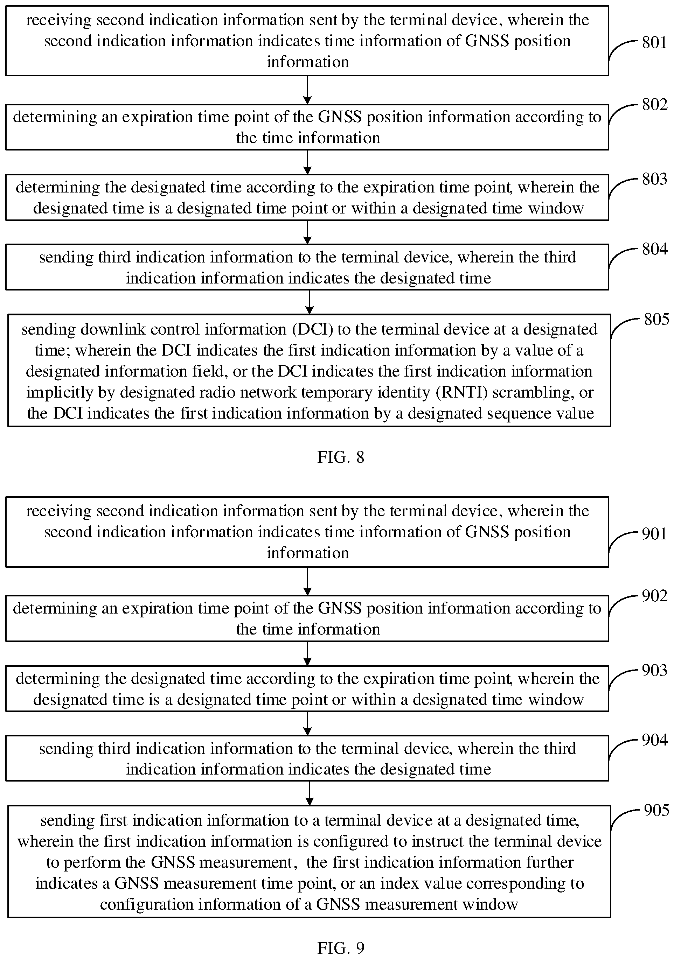

Please refer to FIG. 8, FIG. 8 is a flowchart of a method for indicating global navigation satellite system (GNSS) measurement provided by an embodiment of the disclosure. The method is performed by a network device. As illustrated in FIG. 8, the method may include, but is not limited to, following steps.

At step 801, second indication information sent by the terminal device is received. The second indication information indicates time information of GNSS position information.

At step 802, an expiration time point of the GNSS position information is determined according to the time information.

At step 803, the designated time is determined according to the expiration time point.

At step 804, third indication information is sent to the terminal device, in which the third indication information indicates the designated time.

In the present disclosure, the specific implementation process of step 801 to step 804 may refer to the detailed description of any embodiment of the present disclosure, and will not be repeated here.

At step 805, downlink control information (DCI) is sent to the terminal device at the designated time. The DCI indicates the first indication information by a value of a designated information field, or the DCI indicates the first indication information implicitly by designated radio network temporary identity (RNTI) scrambling, or the DCI indicates the first indication information by a designated sequence value.

The specific description of the first indication information may refer to the detailed description of any embodiment of the present disclosure, and will not be repeated here.

In the present disclosure, a value of a certain fixed or configurable information field in the downlink control information (DCI) may be utilized to instruct the terminal device to perform the GNSS measurement. For example, in a case that the terminal device needs to perform the GNSS measurement, the network device may set the value of the designated information field in the DCI to be as "1" and send the DCI to the terminal device. Therefore, the terminal device may determine to perform the GNSS measurement after receiving the DCI. In a case that the terminal device does not need to perform the GNSS measurement, the network device may set the value of the designated information field in the DCI to be as "0" and send the DCI to the terminal device. The terminal device may determine not to perform the GNSS measurement after receiving the DCI.

Optionally, the DCI may implicitly instruct the terminal device to perform the GNSS measurement. For example, the network device may scramble the DCI using the designated radio network temporary identity (RNTI), and send the DCI to the terminal device. In a case that the terminal device receives the DCI and determines that a RNTI value scrambled on the DCI is a designated RNTI value, or determines that the RNTI value scrambled on the DCI belongs to a value in a preset RNTI value set, the terminal device may determine to perform the GNSS measurement.

Optionally, the network device may scramble the DCI using a designated orthogonal scrambling sequence and send the DCI to the terminal device, to instruct the terminal device to perform the GNSS measurement. After receiving the DCI, the terminal device may determine whether to perform the GNSS measurement based on a sequence value carried on the DCI.

Optionally, the network device may instruct the terminal device to perform the GNSS measurement by the designated sequence value in the DCI. Therefore, after receiving the DCI, the terminal device may perform the GNSS measurement in a case of determining that the DCI includes the designated sequence value, and may not perform the GNSS measurement in a case of determining that the DCI does not include the designated sequence value

Optionally, the network device may also instruct the terminal device to perform the GNSS measurement by system information, a radio resource control (RRC) message, or a medium access control (MAC) control element (CE). For example, instructing the terminal device to perform the GNSS measurement may be based on a value of a certain bit in the RRC message.

In the present disclosure, after receiving the second indication information for indicating the time information of GNSS position information sent by the terminal device, the network device may determine the expiration time point of the GNSS position information based on the time information of the GNSS position information, and then determine the designated time based on the expiration time point of the GNSS position information, send the third indication information for indicating the designated time to the terminal device, and send the DCI for the first indication information to the terminal device at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

Please refer to FIG. 9, FIG. 9 is a flowchart of a method for indicating global navigation satellite system (GNSS) measurement provided by an embodiment of the disclosure. The method is performed by a network device. As illustrated in FIG. 9, the method may include, but is not limited to, following steps.

At step 901, second indication information sent by the terminal device is received. The second indication information indicates time information of GNSS position information.

At step 902, an expiration time point of the GNSS position information is determined according to the time information.

At step 903, the designated time is determined according to the expiration time point. The designated time is a designated time point or within a designated time window.

At step 904, third indication information is sent to the terminal device, in which the third indication information indicates the designated time.

In the present disclosure, the specific implementation process of step 901 to step 904 may refer to the detailed description of any embodiment of the present disclosure, and will not be repeated here.

At step 905, first indication information is sent to the terminal device at the designated time, in which the first indication information is configured to instruct the terminal device to perform the GNSS measurement. The first indication information further indicates a GNSS measurement time point, or an index value corresponding to configuration information of a GNSS measurement window.

The configuration information of the GNSS measurement window may include: a starting time for performing GNSS measurement, a length of time for performing GNSS measurement, an ending time for performing GNSS measurement, a GNSS measurement period, a length of GNSS information, etc. The present disclosure does not limit the information.

In the present disclosure, the network device may indicate the GNSS measurement time point, or the index value corresponding to the configuration information of the GNSS measurement window of the terminal device by the first indication information. Therefore, the terminal device may perform the GNSS measurement at the GNSS measurement time point indicated by the first indication information. Alternatively, the terminal device may also determine the configuration information of the GNSS measurement window based on the index value corresponding to the configuration information of the GNSS measurement window indicated by the first indication information and a preset correspondence between the index value and the configuration information of the GNSS measurement window, and then may perform the GNSS measurement based on the configuration information of the GNSS measurement window.

Optionally, the network device may also send fourth indication information to the terminal device to indicate configuration information of a plurality of GNSS measurement windows and index values corresponding to the configuration information of the plurality of GNSS measurement windows respectively. Therefore, the terminal device may determine the configuration information of the GNSS measurement window based on the index value corresponding to the configuration information of the GNSS measurement window indicated by the first indication information, and the configuration information of the plurality of GNSS measurement windows and the index values corresponding to the configuration information of the plurality of GNSS measurement windows respectively indicated by the fourth indication information, and then perform the GNSS measurement based on the configuration information of the GNSS measurement window.

Optionally, the network device may configure the configuration information of the plurality of GNSS measurement windows in the DCI and send the DCI to the terminal device, and send a value of an information field corresponding to configuration information of a GNSS measurement window to be used to the terminal device. Thus, the terminal device may determine the configuration information of the GNSS measurement window based on the value of the information field.

For example, assumed that a mapping relationship between the configuration information of the GNSS measurement window and the value of the information field is as shown in Table 1. In a case that the network device determines, based on the mapping relationship between the configuration information and the value of the information field as shown in Table 1, that the value of the information field associated with the configuration information of the GNSS measurement window to be used by the terminal device is 00, the network device may send the value 00 of the information field to the terminal device, to instruct the terminal device to perform the GNSS measurement based on configuration information 1 associated with the value 00 of the information field.

**Table 1**

| value of information field | Configuration information of GNSS measurement window |
|---|---|
| 00 | Configuration information 1 |
| 01 | Configuration information 2 |
| 10 | Configuration information 4 |
| 11 | Configuration information 4 |

It can be understood that each element in Table 1 exists independently, and these elements are illustratively listed in the same table, but it does not mean that all elements in the table must exist at the same time as shown in the table. The value of each element does not depend on the value of any other element in Table 1. Therefore, those skilled in the art can understand that the value of each element in Table 1 is an independent embodiment.

In the present disclosure, after receiving the second indication information for indicating the time information of GNSS position information sent by the terminal device, the network device may determine the expiration time point of the GNSS position information based on the time information of the GNSS position information, and then determine the designated time based on the expiration time point of the GNSS position information, send the third indication information for indicating the designated time to the terminal device, and send to the terminal device the first indication information for indicating the GNSS measurement time point, or the index value corresponding to the configuration information of the GNSS measurement window and instructing the terminal device to perform the GNSS measurement at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

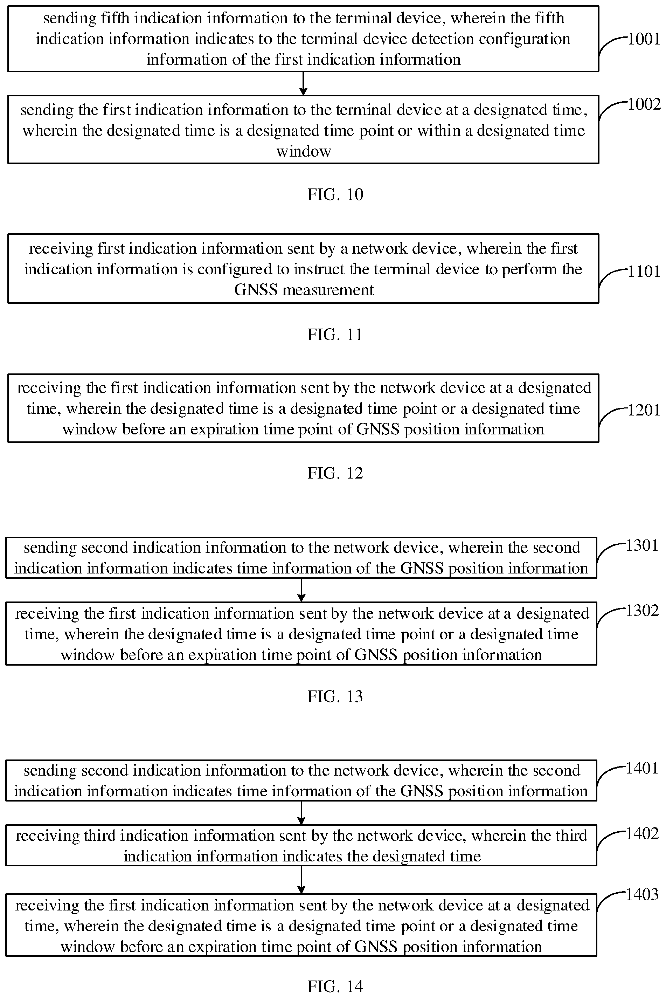

Please refer to FIG. 10, FIG. 10 is a flowchart of a method for indicating global navigation satellite system (GNSS) measurement provided by an embodiment of the disclosure. The method is performed by a network device. As illustrated in FIG. 10, the method may include, but is not limited to, following steps.

At step 1001, fifth indication information is sent to the terminal device. The fifth indication information indicates to the terminal device detection configuration information of the first indication information.

The detection configuration information may include information such as a signaling format of the first indication information, a sending period of the first indication information, the number of detections, etc., and the present disclosure does not limit the information.

In the present disclosure, in order to ensure an accuracy of the first indication information received by the terminal device, the network device may send the detection configuration information of the first indication information to the terminal device. Correspondingly, the terminal device may receive the first indication information sent by the network device according to the detection configuration information. For example, the terminal device may periodically receive the first indication information according to the sending period of the first indication information.

At step 1002, the first indication information is sent to the terminal device at a designated time. The designated time is a designated time point or within a designated time window.

In the present disclosure, the network device may send to the terminal device the fifth indication information for indicating to the terminal device the detection configuration information of the first indication information, and send the first indication information to the terminal device at the designated time, to trigger the terminal device to perform the GNSS measurement. It may ensure that the last valid GNSS position information of the terminal device is obtained before the current GNSS position information of the terminal device becomes invalid, thus preventing the terminal device from entering the idle state, and improving communication performance.

Please refer to FIG. 11, FIG. 11 is a flowchart of a method for indicating global navigation satellite system (GNSS) measurement provided by an embodiment of the disclosure. The method is performed by a terminal device. As illustrated in FIG. 11, the method may include, but is not limited to, following step.

At step 1101, first indication information sent by a network device is received. The first indication information is configured to instruct the terminal device to perform the GNSS measurement.

In the present disclosure, in a satellite communication network, the terminal device can be positioned by a global navigation satellite system (GNSS) to determine GNSS position information, and perform uplink synchronization compensation based on the GNSS position information. However, the GNSS position information of the terminal device is time-sensitive. If the GNSS position information expires, the terminal device can enter an idle state to re-obtain the GNSS position information, which may cause unnecessary service delay and power consumption.

In the present disclosure, the network device may send the first indication information to the terminal device before the GNSS position information of the terminal device becomes invalid, instructing the terminal device to perform the GNSS measurement.

Optionally, the network device may determine validity of the current GNSS position information of the terminal device, and send the first indication information to the terminal device at an appropriate occasion, instructing the terminal device to perform the GNSS measurements, which may ensure that the last valid GNSS position information of the terminal device is obtained before the current GNSS position information of the terminal device becomes invalid, thus avoiding a delay caused by the terminal device entering the idle state, and improving communication performance.

In the disclosure, the terminal device may receive the first indication information for instructing the terminal device to perform the GNSS measurement sent by the network device, to perform the GNSS measurement. It may ensure that the last valid GNSS position information of the terminal device is obtained before the current GNSS position information of the terminal device becomes invalid, thus preventing the terminal device from entering the idle state, and improving communication performance.

Please refer to FIG. 12, FIG. 12 is a flowchart of a method for indicating global navigation satellite system (GNSS) measurement provided by an embodiment of the disclosure. The method is performed by a terminal device. As illustrated in FIG. 12, the method may include, but is not limited to, following step.

At step 1201, the first indication information sent by the network device is received at a designated time. The designated time is a designated time point or a designated time window before an expiration time point of GNSS position information.

The specific description of the first indication information may refer to the detailed description of any embodiment of the present disclosure, and will not be repeated here.

In the present disclosure, the network device may send the first indication information to the terminal device at the designated time before the current GNSS position information of the terminal device becomes invalid, or within the designated time window before the current GNSS position information of the terminal device becomes invalid, to instruct the terminal device to perform the GNSS measurement. Correspondingly, the terminal device may receive the first indication information sent by the network device at the designated time. On the one hand, it may effectively prevent the terminal device from entering an idle state caused by the GNSS position information of the terminal device becoming invalid. On the other hand, it can avoid signaling consumption. The time window may be a continuous period of time.

For example, as shown in FIG. 4, the network device in FIG. 4 may send the first indication information to the terminal device within a designated time window before a GNSS position measured by the GNSS at a first time position (that is, the current GNSS position) becomes invalid, to instruct the terminal device to perform the GNSS measurement. Correspondingly, the terminal device may receive the first indication information sent by the network device at the designated time and perform the GNSS measurement, and may obtain the last valid GNSS position (that is, a GNSS position measured by the GNSS at a second time position). It may effectively prevent the terminal device from entering the idle state caused by the GNSS position information of the terminal device becoming invalid.

For another example, as shown in FIG. 5, the network device in FIG. 5 may send the first indication information to the terminal device at a designated time point before the GNSS position measured by the GNSS at the first time position (that is, the current GNSS position) becomes invalid, to instruct the terminal device to perform the GNSS measurement. Correspondingly, the terminal device may receive the first indication information sent by the network device at the designated time and perform the GNSS measurement, and may obtain the last valid GNSS position (that is, a GNSS position measured by the GNSS at a second time position). It may effectively prevent the terminal device from entering the idle state caused by the GNSS position information of the terminal device becoming invalid.

Optionally, without receiving the first indication information at a first designated time, the terminal device may withhold from performing the GNSS measurement before a next adjacent designated time.

In the present disclosure, the terminal device may receive the first indication information for instructing the terminal device to perform the GNSS measurement from the network device at the designated time, and then perform the GNSS measurement. It may ensure that the last valid GNSS position information of the terminal device is obtained before the current GNSS position information of the terminal device becomes invalid, thus preventing the terminal device from entering the idle state, and improving communication performance.

Please refer to FIG. 13, FIG. 13 is a flowchart of a method for indicating global navigation satellite system (GNSS) measurement provided by an embodiment of the disclosure. The method is performed by a network device. As illustrated in FIG. 13, the method may include, but is not limited to, following steps.

At step 1301, second indication information is sent to the network device. The second indication information indicates time information of the GNSS position information.

The time information of the GNSS position information may configured to indicate available time information or unavailable time information of the GNSS position information.

In the present disclosure, after determining the GNSS position information, the terminal device may determine the available time information or the unavailable time information of the GNSS position information based on a mobile speed of the terminal device, etc., and then send the second indication information for indicating the time information of the GNSS position information to the network device, to indicate to the network device a valid time of the GNSS position information. Correspondingly, the network device may determine the expiration time point of the GNSS position information based on the time information of the GNSS position information, determine the designated time based on the expiration time point of the GNSS position information, and send the first indication information to the terminal devices at the designated time to instruct the terminal device to perform the GNSS measurement. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

At step 1302, the first indication information sent by the network device is received at the designated time. The designated time is a designated time point or a designated time window before an expiration time point of GNSS position information.

In the present disclosure, the specific implementation process of step 1302 may refer to the detailed description of any embodiment of the present disclosure, and will not be repeated here.

In the present disclosure, after sending the second indication information for indicating the time information of GNSS position information to the network device, the terminal device may receive the first indication information sent by the network device at the designated time before the expiration time point of the GNSS position information. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

Please refer to FIG. 14, FIG. 14 is a flowchart of a method for indicating global navigation satellite system (GNSS) measurement provided by an embodiment of the disclosure. The method is performed by a network device. As illustrated in FIG. 14, the method may include, but is not limited to, following steps.

At step 1401, second indication information is sent to the network device. The second indication information indicates time information of the GNSS position information.

In the present disclosure, the specific implementation process of step 1401 may refer to the detailed description of any embodiment of the present disclosure, and will not be repeated here.

At step 1402, third indication information sent by the network device is received. The third indication information indicates the designated time.

In the present disclosure, the network device may send to the terminal device the third indication information for indicating the designated time, to indicate a time at which the terminal device receives the first indication information. Therefore, the terminal device may receive the first indication information sent by the network device at the designated time, thus improving an accuracy of reception of the first indication information.

At step 1403, the first indication information sent by the network device is received at the designated time. The designated time is a designated time point or a designated time window before an expiration time point of GNSS position information.

In the present disclosure, the specific implementation process of step 1403 may refer to the detailed description of any embodiment of the present disclosure, and will not be repeated here.

In the present disclosure, after sending the second indication information for indicating the time information of GNSS position information to the network device, the terminal device may receive the third indication information for indicating the designated time from the network device, and receive the first indication information for instructing the terminal device to perform the GNSS measurement from the network device at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

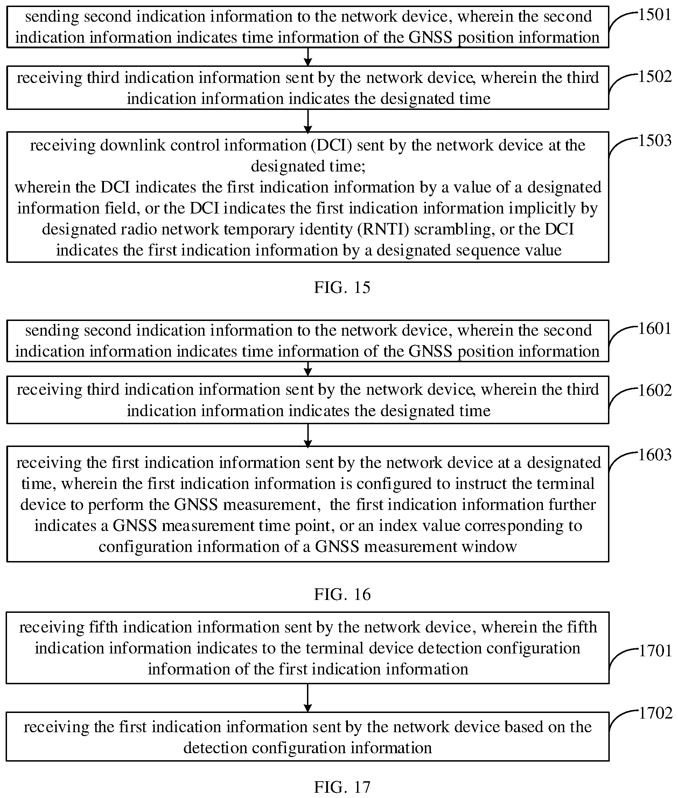

Please refer to FIG. 15, FIG. 15 is a flowchart of a method for indicating global navigation satellite system (GNSS) measurement provided by an embodiment of the disclosure. The method is performed by a network device. As illustrated in FIG. 15, the method may include, but is not limited to, following steps.

At step 1501, second indication information is sent to the network device. The second indication information indicates time information of the GNSS position information.

At step 1502, third indication information sent by the network device is received. The third indication information indicates the designated time.

In the present disclosure, the specific implementation process of step 1501 to step 1502 may refer to the detailed description of any embodiment of the present disclosure, and will not be repeated here.

At step 1503, downlink control information (DCI) sent by the network device is received at a designated time. The DCI indicates the first indication information by a value of a designated information field, or the DCI indicates the first indication information implicitly by designated radio network temporary identity (RNTI) scrambling, or the DCI indicates the first indication information by a designated sequence value.

The specific description of the first indication information may refer to the detailed description of any embodiment of the present disclosure, and will not be repeated here.

In the present disclosure, a value of a certain fixed or configurable information field in the downlink control information (DCI) may be utilized to instruct the terminal device to perform the GNSS measurement. For example, in a case that the terminal device needs to perform the GNSS measurement, the network device may set the value of the designated information field in the DCI to be as "1" and send the DCI to the terminal device. Therefore, the terminal device may determine to perform the GNSS measurement after receiving the DCI. In a case that the terminal device does not need to perform the GNSS measurement, the network device may set the value of the designated information field in the DCI to be as "0" and send the DCI to the terminal device. The terminal device may determine not to perform the GNSS measurement after receiving the DCI.

Optionally, the DCI may implicitly instruct the terminal device to perform the GNSS measurement. For example, the network device may scramble the DCI using the designated radio network temporary identity (RNTI), and send the DCI to the terminal device. In a case that the terminal device receives the DCI and determines that a RNTI value scrambled on the DCI is a designated RNTI value, or determines that the RNTI value scrambled on the DCI belongs to a value in a preset RNTI value set, the terminal device may determine to perform the GNSS measurement.

Optionally, the network device may scramble the DCI using a designated orthogonal scrambling sequence and send the DCI to the terminal device, to instruct the terminal device to perform the GNSS measurement. After receiving the DCI, the terminal device may determine whether to perform the GNSS measurement based on a sequence value carried on the DCI.

Optionally, the network device may instruct the terminal device to perform the GNSS measurement by the designated sequence value in the DCI. Therefore, after receiving the DCI, the terminal device may perform the GNSS measurement in a case of determining that the DCI includes the designated sequence value, and may not perform the GNSS measurement in a case of determining that the DCI does not include the designated sequence value

Optionally, the network device may also instruct the terminal device to perform the GNSS measurement by system information, a radio resource control (RRC) message, or a medium access control (MAC) control element (CE). For example, instructing the terminal device to perform the GNSS measurement may be based on a value of a certain bit in the RRC message. Corresponding, the terminal device may receive the first indication information sent by the network device by the system information, the radio resource control (RRC) message, or the medium access control (MAC) control element (CE).

In the present disclosure, after sending the second indication information for indicating the time information of GNSS position information to the network device, the terminal device may receive the third indication information for indicating the designated time from the network device, and receive the DCI for indicating the first indication information from the network device at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

Please refer to FIG. 16, FIG. 16 is a flowchart of a method for indicating global navigation satellite system (GNSS) measurement provided by an embodiment of the disclosure. The method is performed by a network device. As illustrated in FIG. 16, the method may include, but is not limited to, following steps.

At step 1601, second indication information is sent to the network device. The second indication information indicates time information of the GNSS position information.

At step 1602, third indication information sent by the network device is received. The third indication information indicates the designated time.

In the present disclosure, the specific implementation process of step 1601 to step 1602 may refer to the detailed description of any embodiment of the present disclosure, and will not be repeated here.

At step 1603, first indication information sent by the network device is received at the designated time, in which the first indication information is configured to instruct the terminal device to perform the GNSS measurement. The first indication information further indicates a GNSS measurement time point, or an index value corresponding to configuration information of a GNSS measurement window.

The configuration information of the GNSS measurement window may include: a starting time for performing GNSS measurement, a length of time for performing GNSS measurement, an ending time for performing GNSS measurement, a GNSS measurement period, a length of GNSS information, etc. The present disclosure does not limit the information.

In the present disclosure, the network device may indicate the GNSS measurement time point, or the index value corresponding to the configuration information of the GNSS measurement window of the terminal device by the first indication information. Therefore, the terminal device may perform the GNSS measurement at the GNSS measurement time point indicated by the first indication information. Alternatively, the terminal device may also determine the configuration information of the GNSS measurement window based on the index value corresponding to the configuration information of the GNSS measurement window indicated by the first indication information and a preset correspondence between the index value and the configuration information of the GNSS measurement window, and then may perform the GNSS measurement based on the configuration information of the GNSS measurement window.

Optionally, the network device may also send fourth indication information to the terminal device to indicate configuration information of a plurality of GNSS measurement windows and index values corresponding to the configuration information of the plurality of GNSS measurement windows respectively. Therefore, the terminal device may determine the configuration information of the GNSS measurement window based on the index value corresponding to the configuration information of the GNSS measurement window indicated by the first indication information, and the configuration information of the plurality of GNSS measurement windows and the index values corresponding to the configuration information of the plurality of GNSS measurement windows respectively indicated by the fourth indication information, and then perform the GNSS measurement based on the configuration information of the GNSS measurement window.

Optionally, the network device may configure the configuration information of the plurality of GNSS measurement windows in the DCI and send the DCI to the terminal device, and send a value of an information field corresponding to configuration information of a GNSS measurement window to be used to the terminal device. Thus, the terminal device may determine the configuration information of the GNSS measurement window based on the value of the information field.

For example, assumed that a mapping relationship between the configuration information of the GNSS measurement window and the value of the information field is as shown in Table 1. In a case that the network device determines, based on the mapping relationship between the configuration information and the value of the information field as shown in Table 1, that the value of the information field associated with the configuration information of the GNSS measurement window to be used by the terminal device is 00, the network device may send the value 00 of the information field to the terminal device, to instruct the terminal device to perform the GNSS measurement based on configuration information 1 associated with the value 00 of the information field.

In the present disclosure, after sending the second indication information for indicating the time information of GNSS position information to the network device, the terminal device may receive the third indication information for indicating the designated time from the network device, and receive the first indication information for indicating the GNSS measurement time point, or the index value corresponding to the configuration information of the GNSS measurement window and instructing the terminal device to perform the GNSS measurement from the network at the designated time. Therefore, an occasion of instructing the terminal device to perform the GNSS measurement is determined based on the expiration time point of the GNSS position information, it may ensure that the last valid GNSS position information of the terminal device is obtained before the current GNSS position information of the terminal device becomes invalid, thus preventing the terminal device from entering the idle state, and improving communication performance.

Please refer to FIG. 17, FIG. 17 is a flowchart of a method for indicating global navigation satellite system (GNSS) measurement provided by an embodiment of the disclosure. The method is performed by a network device. As illustrated in FIG. 17, the method may include, but is not limited to, following steps.

At step 1701, fifth indication information sent by the network device is received, in which the fifth indication information indicates to the terminal device detection configuration information of the first indication information.

The detection configuration information may include information such as a signaling format of the first indication information, a sending period of the first indication information, the number of detections, etc., and the present disclosure does not limit the information.

In the present disclosure, in order to ensure an accuracy of the first indication information received by the terminal device, the network device may send the detection configuration information of the first indication information to the terminal device. Correspondingly, the terminal device may receive the first indication information sent by the network device according to the detection configuration information. For example, the terminal device may periodically receive the first indication information according to the sending period of the first indication information.

At step 1702, the first indication information sent by the network device is received based on the detection configuration information at the designated time.

In the present disclosure, the specific implementation process of step 1702 to step 904 may refer to the detailed description of any embodiment of the present disclosure, and will not be repeated here.

In the present disclosure, the terminal device may receive the fifth indication information for indicating to the terminal device the detection configuration information of the first indication information from the network device, and receive the first indication information sent by the network device based on the detection configuration information at the designated time. Then, the terminal device may perform the GNSS measurement. It may ensure that the last valid GNSS position information of the terminal device is obtained before the current GNSS position information of the terminal device becomes invalid, thus preventing the terminal device from entering the idle state, and improving communication performance.

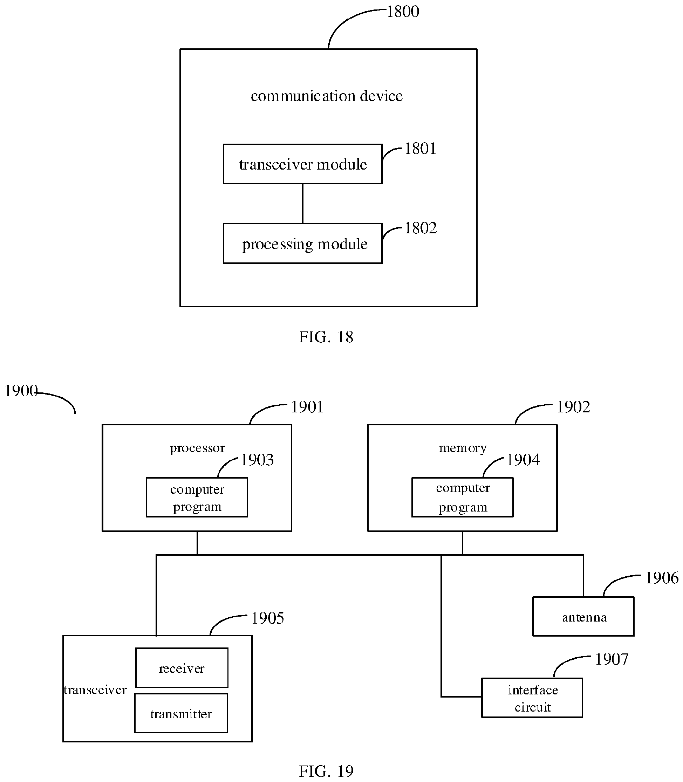

FIG. 18 is a structural diagram of a communication device 1800 provided by an embodiment of the disclosure. The communication device 1800 shown in FIG. 18 includes a transceiver module 1801 and a processing module 1802. The transceiver module 1801 includes a transmitting module and/or a receiving module. The transmitting module is configured to implement a transmitting function, and the receiving module is configured to implement a receiving function. The transceiver module 1801 may implement the transmitting function and/or the receiving function.

It is noted that the communication device 1801 may be a network side device, a device in the network side device, or a device capable of being used together with the network side device.

If the communication device 1800 is a network device side, in which,

The transceiver module 1801 is configured to send first indication information to a terminal device, in which the first indication information is configured to instruct the terminal device to perform global navigation satellite system (GNSS) measurement.

Optionally, the transceiver module 1801 is configured to:
send the first indication information to the terminal device at a designated time, in which the designated time is a designated time point or within a designated time window.

Optionally, the transceiver module 1801 is configured to:
receive second indication information sent by the terminal device, in which the second indication information indicates time information of GNSS position information;
the device further includes a processing module 1802, configured to:
determine an expiration time point of the GNSS position information according to the time information; determine the designated time according to the expiration time point.

Optionally, the processing module 1802 is configured to:
determine any time point that is before the expiration time point and with a time interval greater than a first threshold from the expiration time point as the designated time point; or,
determine a designated duration before the expiration time point as the designated time window, in which a time interval between an ending time point of the designated duration and the expiration time point is greater than a second threshold.

Optionally, the transceiver module 1801 is configured to:
send third indication information to the terminal device, in which the third indication information indicates the designated time.

Optionally, the transceiver module 1801 is configured to:
send downlink control information (DCI) to the terminal device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information is sent to the terminal device by any one of:
system information; a radio resource control (RRC) message; or a media access control (MAC) control element (CE).

Optionally, the first indication information further indicates a GNSS measurement time point, or an index value corresponding to configuration information of a GNSS measurement window.

Optionally, the transceiver module 1801 is configured to:
send fourth indication information to the terminal device, in which the fourth indication information indicates configuration information of a plurality of GNSS measurement windows and index values corresponding to the configuration information of the plurality of GNSS measurement windows respectively.

Optionally, the transceiver module 1801 is configured to:
send fifth indication information to the terminal device, in which the fifth indication information indicates to the terminal device detection configuration information of the first indication information.

In the disclosure, the network device may send the first indication information for instructing the terminal device to perform the GNSS measurement to the terminal device, to trigger the terminal device to perform the GNSS measurement, which may ensure that the last valid GNSS position information of the terminal device is obtained before the current GNSS position information of the terminal device becomes invalid, thus preventing the terminal device from entering the idle state, and improving communication performance.

It is noted that the communication device 1801 may be a terminal device, a device in the terminal device, or a device capable of being used together with the terminal device.

If the communication device 1800 is a terminal device side, in which,

The transceiver module 1801 configured to receive first indication information sent by a network device, in which the first indication information is configured to instruct the terminal device to perform the GNSS measurement.

Optionally, the transceiver module 1801 configured to:
receive the first indication information sent by the network device at a designated time, in which the designated time is a designated time point or a designated time window before an expiration time point of GNSS position information.

Optionally, the transceiver module 1801 is configured to:
send second indication information to the network device, in which the second indication information indicates time information of the GNSS position information.

Optionally, the transceiver module 1801 is configured to:
receive third indication information sent by the network device, wherein the third indication information indicates the designated time.

Optionally, the device further includes :
a processing module 1802, configured to, without receiving the first indication information at a first designated time, withhold from performing the GNSS measurement before a next adjacent designated time.

Optionally, the transceiver module 1801 is configured to:
receive downlink control information (DCI) sent by the network device;
in which the DCI indicates the first indication information by a value of a designated information field, or the DCI indicates the first indication information implicitly by designated radio network temporary identity (RNTI) scrambling, or the DCI indicates the first indication information by a designated sequence value.

Optionally, the first indication information sent by the terminal device is received by any one of:
system information; a radio resource control (RRC) message; or a media access control (MAC) control element (CE).

Optionally, the first indication information further indicates a GNSS measurement time point, or an index value corresponding to configuration information of a GNSS measurement window.

Optionally, the transceiver module 1801 is configured to:
receive fourth indication information sent by the network device, in which the fourth indication information indicates configuration information of a plurality of GNSS measurement windows and index values corresponding to the configuration information of the plurality of GNSS measurement windows respectively.

Optionally, the transceiver module 1801 is configured to:
receive fifth indication information sent by the network device, in which the fifth indication information indicates to the terminal device detection configuration information of the first indication information;
in which receiving the first indication information sent by the network device includes:
   receiving the first indication information sent by the network device based on the detection configuration information.

In the disclosure, the terminal device may receive the first indication information for instructing the terminal device to perform the GNSS measurement sent by the network device, to perform the GNSS measurement, which may ensure that the last valid GNSS position information of the terminal device is obtained before the current GNSS position information of the terminal device becomes invalid, thus preventing the terminal device from entering the idle state, and improving communication performance.

FIG. 19 is a structural diagram of another communication device 1900 provided by an embodiment of the disclosure. The communication device 1900 may be a network side device or a terminal device, or may be a chip, a chip system or a processor that supports the network side device to realize the above-described methods, or may be a chip, a chip system or a processor that supports the terminal device to realize the above-described methods. The communication device 1000 may be used to realize the methods described in the above method embodiments with reference to the description of the above-described method embodiments.

The communication device 1900 may include one or more processors 1901. The processor 1901 may be a general purpose processor or a dedicated processor, such as, a baseband processor and a central processor. The baseband processor is used for processing communication protocols and communication data. The central processor is used for controlling the communication device (e.g., a network side device, a baseband chip, a terminal device, a terminal device chip, a DU, or a CU), executing computer programs, and processing data of the computer programs.

Optionally, the communication device 1900 may include one or more memories 1902 on which computer programs 1904 may be stored. The processor 1901 executes the computer programs 1904 to cause the communication device 1900 to perform the methods described in the above method embodiments. Optionally, the memory 1902 may also store data. The communication device 1900 and the memory 1902 may be provided separately or may be integrated together.

Optionally, the communication device 1900 may also include a transceiver 1905 and an antenna 1906. The transceiver 1905 may be referred to as a transceiver unit, a transceiver machine, or a transceiver circuit, for realizing a transceiver function. The transceiver 1905 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication device 1900 may also include one or more interface circuits 1907. The interface circuits 1907 are used to receive code instructions and transmit them to the processor 1901. The processor 1901 runs the code instructions to cause the communication device 1900 to perform the method described in the method embodiments.

In a case where the communication device 1900 is a network device, the processor 1901 performs steps 602 and 603 in FIG. 6, steps 702 and 703 in FIG. 7, steps 802 and 803 in FIG. 8, steps 902 and 903 in FIG. 9.

In a case where the communication device 1900 is a terminal device, the transceiver 1905 performs steps 1101 in FIG. 11, steps 1201 in FIG. 12, steps 1301 and 1302 in FIG. 13, steps 1401, 1402 and 1403 in FIG. 14, steps 1501, 1502 and 1503 in FIG. 15, steps 1601, 1602 and 1603 in FIG. 16, steps 1701 and 1702 in FIG. 17.

In an implementation, the processor 1901 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1901 may store a computer program 1903. The processor 1901 runs the computer program 1903 to cause the communication device 1900 to perform the methods described in the method embodiments above. The computer program 1903 may be solidified in the processor 1901, and in such case the processor 1901 may be implemented by hardware.

In an implementation, the communication device 1900 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver are produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a terminal device, but the scope of the communication device described in the disclosure is not limited thereto, and the structure of the communication device may not be limited by FIG. 14. The communication device may be a stand-alone device or may be part of a larger device. For example, the described communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

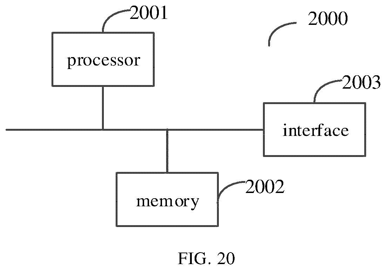

The case where the communication device is a chip or a chip system can be referred to FIG. 20. FIG. 20 is a structural diagram of a chip provided in an embodiment of the disclosure. The chip 2000 includes a processor 2001 and an interface 2003. There may be may be one or more processors 2001, and a plurality of interfaces 2003.

If the chip is used to realize the functions of the network device in the embodiments of the disclosure,
the interface 2003 is configured to execute step 201 in FIG. 2; step 301 in FIG. 3; step 601, step 604 in FIG. 6; step 701, step 704, step 705 in FIG. 7; step 801 in FIG. 8 , step 804, step 805; step 901, step 904, step 905 in FIG. 9; step 1001, step 1002 in FIG. 10, etc.

If the chip is used to realize the functions of the terminal device in the embodiments of the disclosure,
the interface 2003 is configured to execute step 1101 in FIG. 11; step 1201 in FIG. 12; step 1301, step 1302 in FIG. 13; step 1401, step 1402, step 1403 in FIG. 14; step 1501, step 1501 in FIG. 15 Step 1502, step 1503; step 1601, step 1602, step 1603 in FIG. 16; step 1701, step 1702 in FIG. 17, etc.

Optionally, the chip 2000 may also include a memory 2003 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

It can be understood that "a plurality of" in this disclosure refers to two or more, and other quantifiers are similar. "and/or" describes the relationship between related objects, indicating that there can be three relationships. For example, A and/or B can mean: A exists alone, A and B exist simultaneously, and B exists alone. The character "/" generally indicates that the related objects are in an "or" relationship. The singular forms "a", "an" and "the" are intended to include the plural forms as well, unless the context clearly indicates otherwise.

It will be further understood that although the operations are described in a specific order in the drawings in the embodiments of the present disclosure, this should not be understood as requiring that these operations be performed in the specific order shown or in a serial order, or that it is required that Perform all operations shown to obtain the desired results. In certain circumstances, multitasking and parallel processing may be advantageous.

Those skilled in the art understand that "first", "second", or other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, pre-define, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

Other embodiments of the disclosure will be readily apparent to those skilled in the art from consideration of the specification and practice of the invention disclosed herein. This application is intended to cover any variations, uses, or adaptations of the disclosure that follow the general principles of the disclosure and include common knowledge or customary technical means in the technical field that are not disclosed in the disclosure.. It is intended that the specification and examples be considered as exemplary only, with a true scope and spirit of the disclosure being indicated by the following claims.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for indicating global navigation satellite system (GNSS) measurement, performed by a network device, comprising:
sending first indication information to a terminal device, wherein the first indication information is configured to instruct the terminal device to perform the GNSS measurement.

2. The method of claim 1, wherein sending the first indication information to the terminal device comprises:
sending the first indication information to the terminal device at a designated time, wherein the designated time is a designated time point or within a designated time window.

3. The method of claim 2, further comprising:
receiving second indication information sent by the terminal device, wherein the second indication information indicates time information of GNSS position information;
determining an expiration time point of the GNSS position information according to the time information; and
determining the designated time according to the expiration time point.

4. The method of claim 3, further comprising:
determining any time point that is before the expiration time point and with a time interval greater than a first threshold from the expiration time point as the designated time point; or,
determining a designated duration before the expiration time point as the designated time window, wherein a time interval between an ending time point of the designated duration and the expiration time point is greater than a second threshold.

5. The method of claim 3, further comprising:
sending third indication information to the terminal device, wherein the third indication information indicates the designated time.

6. The method of any one of claims 1 to 5, wherein sending the first indication information to the terminal device comprises:
sending downlink control information (DCI) to the terminal device;
wherein the DCI indicates the first indication information by a value of a designated information field, or the DCI indicates the first indication information implicitly by designated radio network temporary identity (RNTI) scrambling, or the DCI indicates the first indication information by a designated sequence value.

7. The method of any one of claims 1 to 5, wherein the first indication information is sent to the terminal device by any one of:
system information;
a radio resource control (RRC) message; or
a media access control (MAC) control element (CE).

8. The method of any one of claims 1 to 7, wherein the first indication information further indicates a GNSS measurement time point, or an index value corresponding to configuration information of a GNSS measurement window.

9. The method of claim 8, further comprising:
sending fourth indication information to the terminal device, wherein the fourth indication information indicates configuration information of a plurality of GNSS measurement windows and index values corresponding to the configuration information of the plurality of GNSS measurement windows respectively.

10. The method of any one of claims 1 to 9, further comprising:
sending fifth indication information to the terminal device, wherein the fifth indication information indicates to the terminal device detection configuration information of the first indication information.

11. A method for indicating global navigation satellite system (GNSS) measurement, performed by a terminal device, comprising:
receiving first indication information sent by a network device, wherein the first indication information is configured to instruct the terminal device to perform the GNSS measurement.

12. The method of claim 11, wherein receiving the first indication information sent by the network device comprises:
receiving the first indication information sent by the network device at a designated time, wherein the designated time is a designated time point or a designated time window before an expiration time point of GNSS position information.

13. The method of claim 12, further comprising:
sending second indication information to the network device, wherein the second indication information indicates time information of the GNSS position information.

14. The method of claim 13, further comprising:
receiving third indication information sent by the network device, wherein the third indication information indicates the designated time.

15. The method of claim 14, further comprising:
without receiving the first indication information at a first designated time, withholding from performing the GNSS measurement before a next adjacent designated time.

16. The method of any one of claims 11 to 15, wherein receiving the first indication information sent by the network device comprises:
receiving downlink control information (DCI) sent by the network device;
wherein the DCI indicates the first indication information by a value of a designated information field, or the DCI indicates the first indication information implicitly by designated radio network temporary identity (RNTI) scrambling, or the DCI indicates the first indication information by a designated sequence value.

17. The method of any one of claims 11-15, wherein the first indication information sent by the terminal device is received by any one of: system information; a radio resource control (RRC) message; or a media access control (MAC) control element (CE).

18. The method of any one of claims 11 to 17, wherein the first indication information further indicates a GNSS measurement time point, or an index value corresponding to configuration information of a GNSS measurement window.

19. The method of claim 18, further comprising:
receiving fourth indication information sent by the network device, wherein the fourth indication information indicates configuration information of a plurality of GNSS measurement windows and index values corresponding to the configuration information of the plurality of GNSS measurement windows respectively.

20. The method of any one of claims 11-19, further comprising:
receiving fifth indication information sent by the network device, wherein the fifth indication information indicates to the terminal device detection configuration information of the first indication information;
wherein receiving the first indication information sent by the network device comprises:
receiving the first indication information sent by the network device based on the detection configuration information.

21. A network device, comprising:
a transceiver module, configured to send first indication information to a terminal device, wherein the first indication information is configured to instruct the terminal device to perform global navigation satellite system (GNSS) measurement.

22. A terminal device, comprising:
a transceiver module, configured to receive first indication information sent by a network device, wherein the first indication information is configured to instruct the terminal device to perform global navigation satellite system (GNSS) measurement.

23. A communication device, comprising a processor and a memory having a computer program stored thereon, wherein the computer program stored in the memory causes the device to perform the method of any one of claims 1-10 when executed by the processor.

24. A communication device, comprising a processor and a memory having a computer program stored thereon, wherein the computer program stored in the memory causes the device to perform the method of any one of claims 11-20 when executed by the processor.

25. A computer-readable storage medium for storing instructions that, when executed, cause the method of any one of claims 1 to 10 to be implemented.

26. A computer-readable storage medium for storing instructions that, when executed, cause the method of any one of claims 11 to 20 to be implemented.
